# EUROPEAN PATENT SPECIFICATION

(11) **EP 3 441 244 B1**
(45) Date of publication and mention of the grant of the patent: **24.11.2021**
(21) Application number: 18187996.6
(22) Date of filing: 08.08.2018
(51) Int. Cl.: B60G 17/019, A01F 15/08

(54) **SELF-PROPELLED VEHICLES WITH PITCH CONTROL**
SELBSTFAHRENDE FAHRZEUGE MIT NICKSTEUERUNG
VÉHICULES AUTOPROPULSÉS AVEC COMMANDE DE TANGAGE

(30) Priority: 11.08.2017 US 201762544139 P; 15.11.2017 US 201762586453 P
(43) Date of publication of application: 13.02.2019
(73) Proprietor: Vermeer Manufacturing Company, Pella, IA 50219 (US)
(72) Inventor: Dockter, Nathan D., Pella, IA Iowa 50219 (US)
(74) Representative: Worthington, Richard Easton

(56) References cited:
- EP-A1- 0 913 280
- EP-A2- 3 162 189
- US-A1- 2007 209 530
- US-A1- 2010 168 959
- US-B2- 7 152 389

## Description

### CROSS-REFERENCE TO RELATED APPLICATIONS

This application claims the benefit of U.S. Provisional Patent Application No. 62/544,139, filed August 11, 2017 and U.S. Provisional Patent Application No. 62/586,453, filed November 15, 2017

### FIELD OF THE DISCLOSURE

The field of the disclosure relates to self-propelled vehicles and, in particular, self-propelled vehicles that include a control system for adjusting the pitch of the vehicle during use. In some embodiments, the self-propelled vehicle includes an inclinometer for measuring the pitch of the terrain near the vehicle.

### BACKGROUND

Self-propelled vehicles having a chassis with a front wheel support system and a rear wheel support system may be used in a variety of applications. As the vehicles are used, the loading on the apparatus (e.g., the carried load such as a formed bale) may cause variations in the weight carried by the front and rear support systems. The added weight may not be carried equally by the front and the rear support systems. Some support systems include a suspension system which allows relative movement between the chassis of the vehicle and the support system. Variations in the weight carried by the suspension system may change the pitch of the apparatus.

In addition, operation of the vehicle over hilly terrain will cause the weight distribution of the apparatus to shift. The shift in weight distribution causes the percentage of weight carried by the front wheel support system and by the rear wheel support system to vary. For vehicles having a suspension, this variation will cause the pitch of the chassis of the apparatus to vary relative to the terrain. In vehicles equipped with a sensor (e.g., inclinometer) for measuring the pitch of the terrain near the vehicle, changes in the relative position of the chassis to the terrain during operation of the vehicle may affect the measurements of the sensor and cause measurement error.

A need exists for systems to control the pitch of the chassis relative to a front or rear wheel support system of the vehicle in order to maintain a consistent relative pitch between the chassis and the terrain in order to allow for improved accuracy of onboard sensors such as inclinometers.

This section is intended to introduce the reader to various aspects of art that may be related to various aspects of the disclosure, which are described and/or claimed below. This discussion is believed to be helpful in providing the reader with background information to facilitate a better understanding of the various aspects of the present disclosure. Accordingly, it should be understood that these statements are to be read in this light, and not as admissions of prior art. US 7152389 B2 discloses a mower suspension system including a first suspension arm coupled to a front side of a frame and a second suspension arm coupled to a lateral side of the frame, the first and second suspension arms being movable in response to changes in elevation of the terrain.

### SUMMARY

One aspect of the present disclosure is directed to a self-propelled vehicle as defined in claim 1.

Various refinements exist of the features noted in relation to the above-mentioned aspects of the present disclosure. Further features may also be incorporated in the above-mentioned aspects of the present disclosure as well.

### BRIEF DESCRIPTION OF THE DRAWINGS

Figure 1 is a perspective view of a self-propelled vehicle;
Figure 2 is a side view of a self-propelled baling vehicle;
Figure 3 is a perspective view of a self-propelled raking vehicle;
Figure 4 is a perspective view of a self-propelled mower conditioner vehicle;
Figure 5 is a perspective view of a self-propelled hay merger vehicle;
Figure 6 is a front view of the self-propelled baling vehicle;
Figure 7 is a perspective view of the self-propelled baling vehicle;
Figure 8 is a perspective view of a caster assembly of the self-propelled baling vehicle;

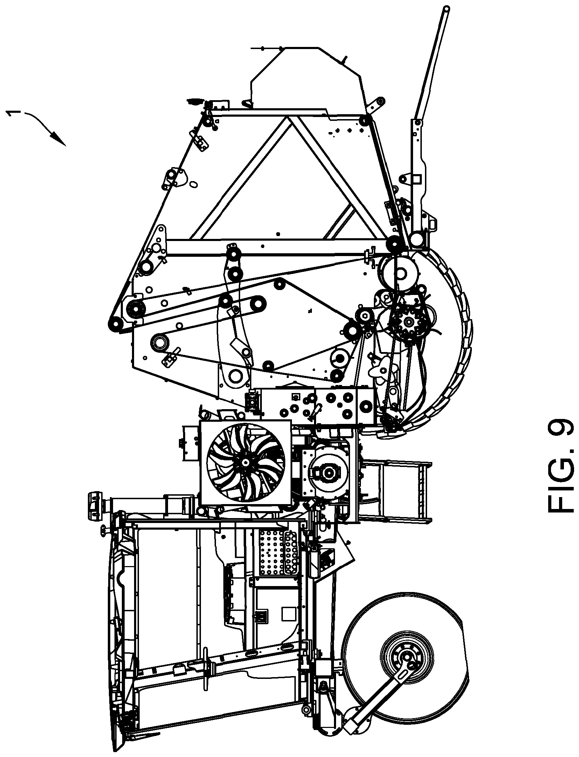

Figure 9 is cross-sectional side view of the self-propelled baling vehicle showing a baling chamber;
Figure 10 is a schematic view of the vehicle showing a hydraulic suspension system;

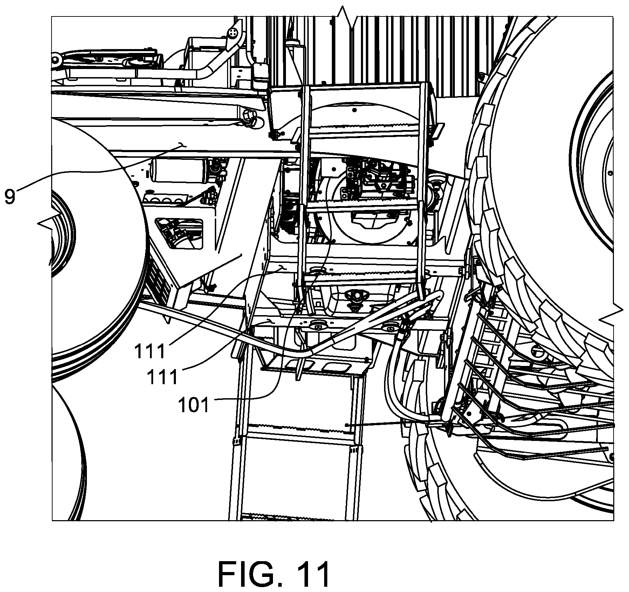

Figure 11 is perspective view of the self-propelled vehicle showing the engine mounting brackets;
Figure 12 is a schematic view of the self-propelled vehicle showing the drive systems and the suspension system;
Figure 13 is a side view of another embodiment of a self-propelled baling vehicle;
Figure 14 is a front view the self-propelled baling vehicle of Figure 13;
Figures 15 is a schematic of a self-propelled vehicle with a relatively light load without a pitch-leveling suspension system;
Figures 16 is a schematic of a self-propelled vehicle with a relatively heavy load without a pitch-leveling suspension system;
Figure 17 is a schematic of a self-propelled vehicle with a pitch-leveling suspension system;
Figure 18 is a schematic of a self-propelled vehicle on a downward slope without a pitch-leveling suspension system;
Figure 19 is a schematic of a self-propelled vehicle on a downward slope with a pitch-leveling suspension system;
Figure 20 is a schematic of a self-propelled vehicle on an upward slope without a pitch-leveling suspension system;
Figure 21 is a schematic of a self-propelled vehicle on an upward slope with a pitch-leveling suspension system; and
Figure 22 is a schematic view of another embodiment of the vehicle showing a hydraulic suspension system.

Corresponding reference characters indicate corresponding parts throughout the drawings.

### DETAILED DESCRIPTION

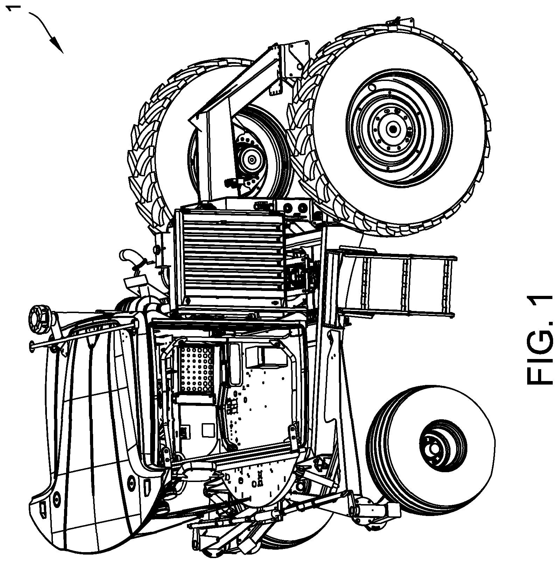

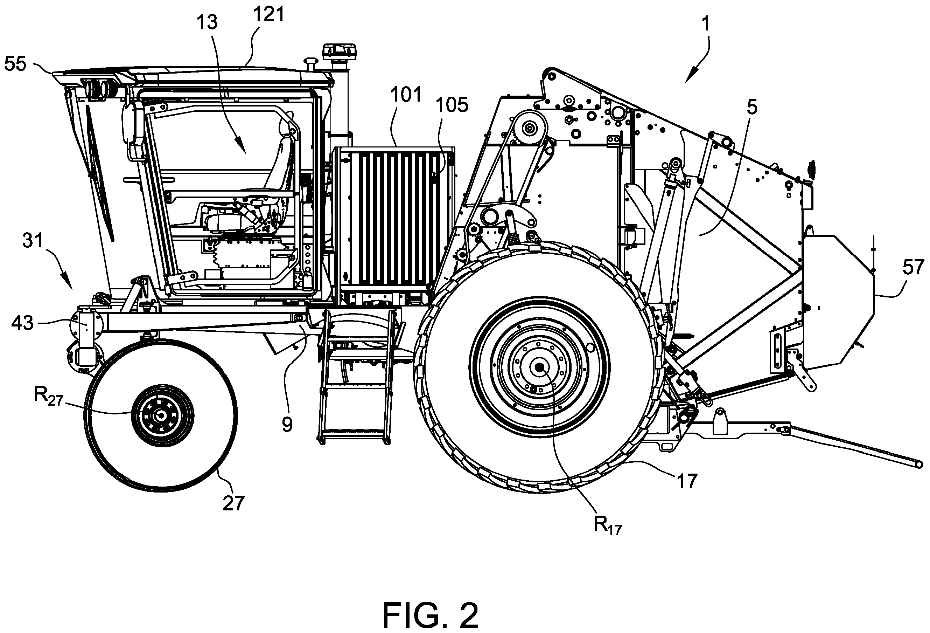

A self-propelled vehicle is generally referred to as "1" in Figure 1. The vehicle 1 is configured to carry a load and/or operate a device such as a baling device 5 (Fig. 2) for forming a bale of crop or forage material. While the description and Figures below may show and/or reference a baling device, it should be noted that a baling device is shown as an exemplary device and the descriptions are applicable to the self-propelled vehicle itself, optionally with different devices attached thereto. While the device may, in some embodiments, be described as an agricultural device, in other embodiments the device may be suitable for use in other fields. The device 5 may be connected to the vehicle 1 in a fixed manner or may be removably connected to the vehicle 1 (e.g., modular).

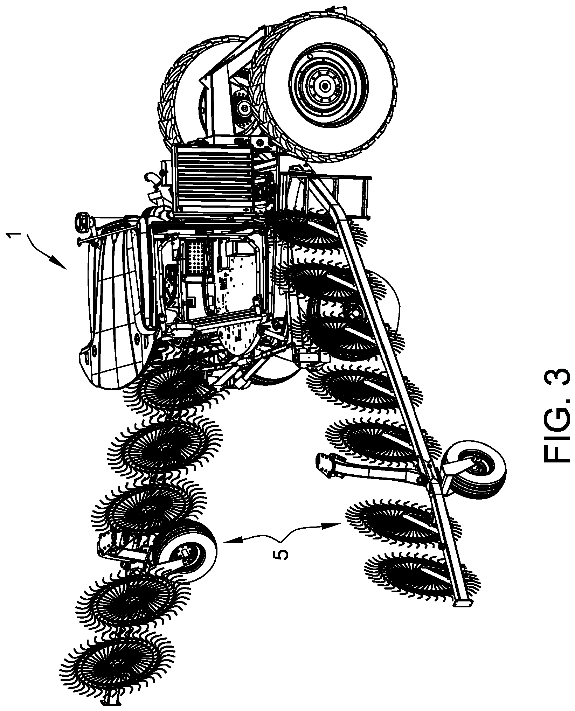

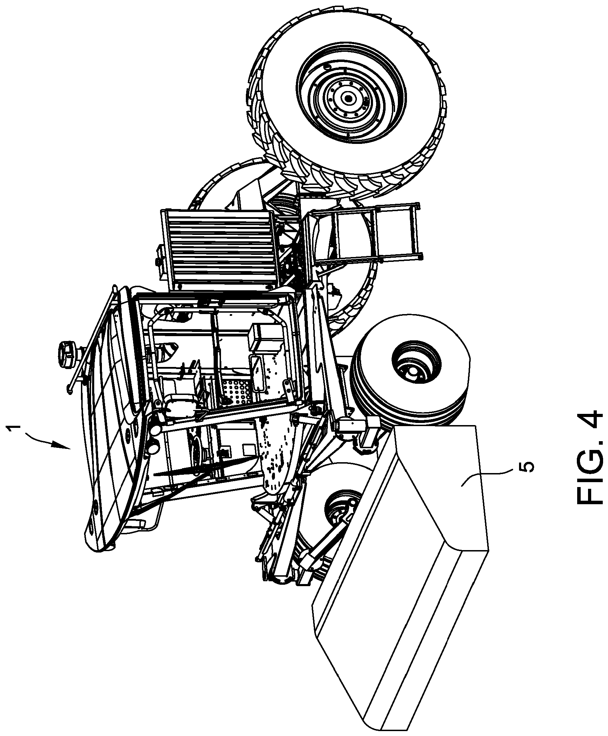

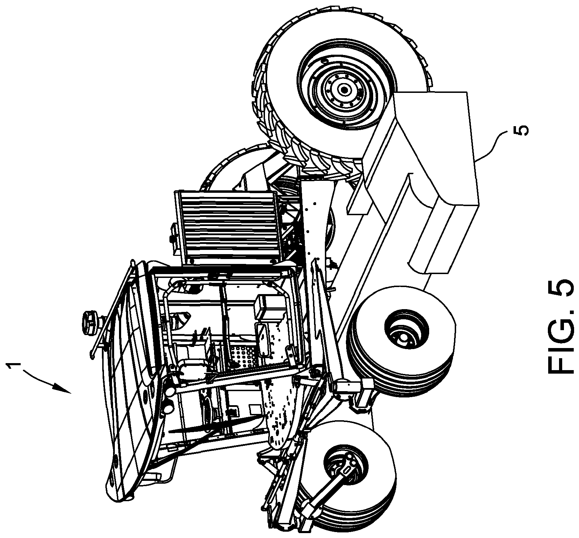

The vehicle may be a self-propelled agricultural vehicle such as a rake (Fig. 3), mower or mower conditioner (Fig. 4), merger (Fig. 5), sprayer, windrower, broadcast spreader, nut or fruit harvester or the like. Other vehicles include salt and aggregate spreaders, shipping vehicles (e.g., trash, commodities, household items or other goods), construction vehicles, trenchers, and concrete cutters.

The self-propelled vehicle 1 is controlled from an operator station 13 (Fig. 2) and is powered by an engine 101. The vehicle 1 includes a device 5 such as a baling device, cutting or mower head, sickle bar, spray tank and/or booms, harvesting devices (e.g., grape or nut harvesting devices), broadcast spreader, salt and aggregate spreader, shipping container (e.g., trash, commodities, household items or other goods), construction devices or trencher, or concrete cutter. The vehicle 1 may also power the device 5. In some embodiments, the vehicle 1 is adapted to carry a load (e.g., bale, herbicide, fertilizer, or harvested crop such as nuts or fruits).

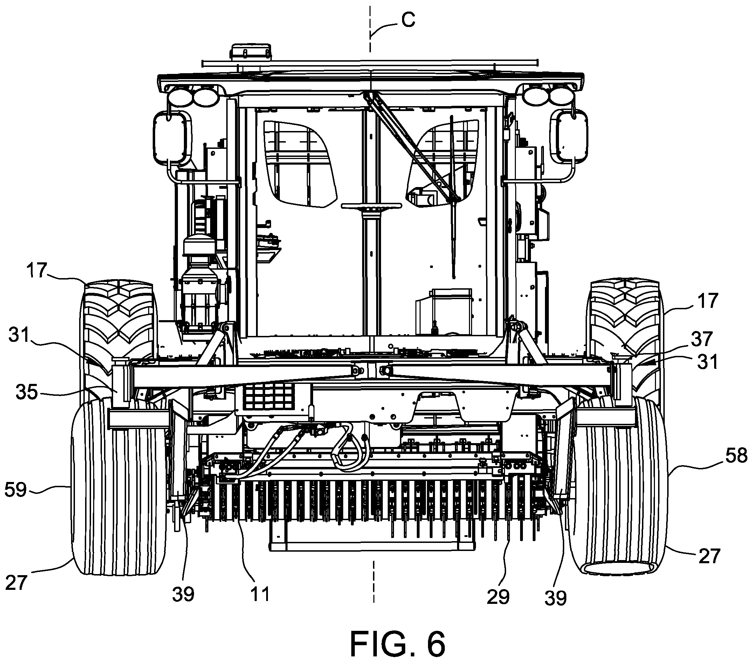

In the illustrated embodiment, the vehicle includes a baling device 5 and a pick-up device 11 (Fig. 6) that rotates to feed crop or forage material to the baling device 5 to form a bale. Each of the operator station 13, engine 101 and device 5 may be supported by a chassis 9 (i.e., the engine 101 is not part of a towing vehicle such as a tractor that releasably connects the device by a hitch assembly attached to an implement tongue).

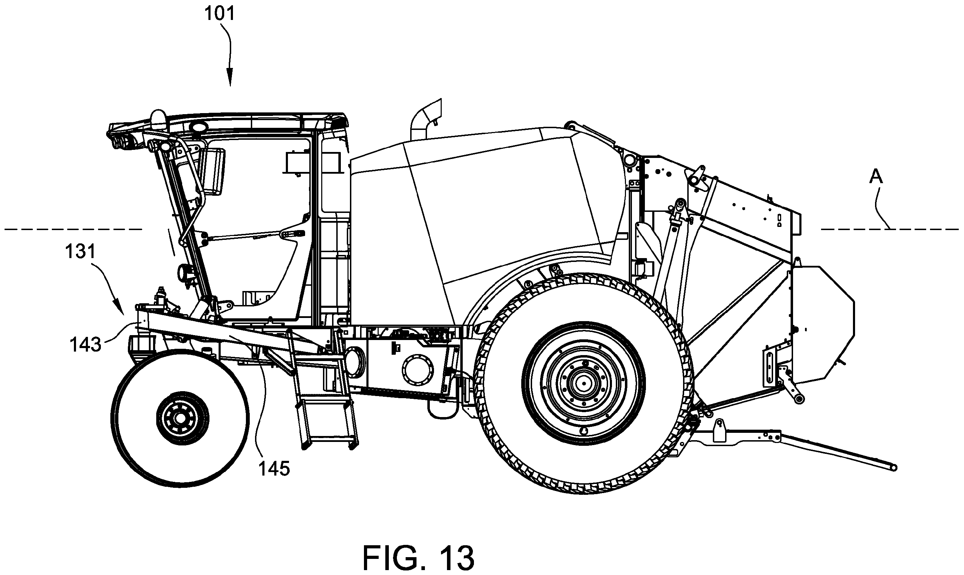

The vehicle 1 includes first and second rear drive wheels 17 that are driven by first and second motors 23 (Fig. 13) that are disposed within the drive wheels. The rear drive wheels 17 each have a rotational axis R₁₇ about which the drive wheels 17 rotate. In the illustrated embodiment, the wheels 17 have a common rotational axis R₁₇. In other embodiments, the wheels 17 are offset from each other and have different axes of rotation. The drive wheels 17 are attached to the chassis 9. In some embodiments, the drive wheels 17 have a diameter of at least about 4 feet, or even at least about 5 feet or at least about 6 feet (e.g., from about 4 feet to about 8 feet or from about 4 feet to about 6 feet).

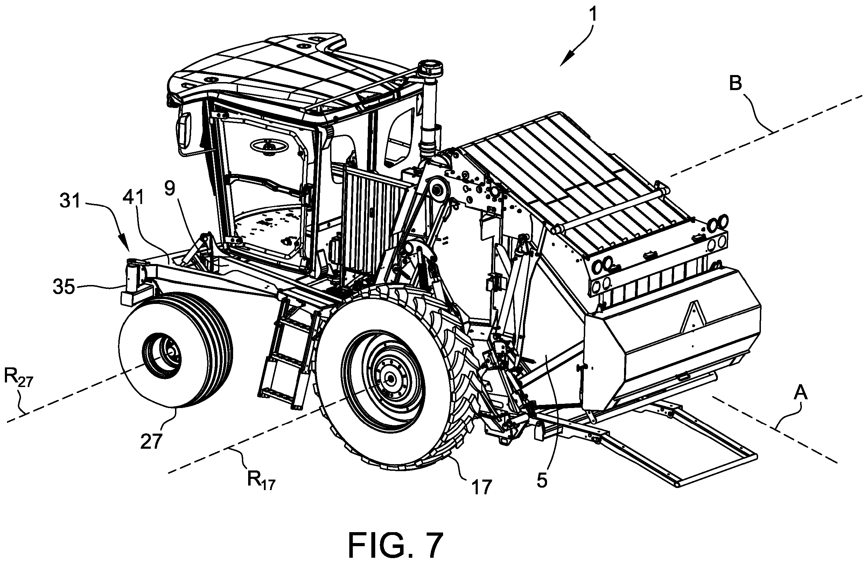

The rear wheels 17 are fixed to the chassis 9 such that the wheels 17 maintain parallel alignment with a longitudinal axis A (Fig. 7) of the vehicle 1 (i.e., do not pivot with respect to the chassis 9). In some embodiments, the rear drive wheels 17 are not suspended from the chassis 9. In other embodiments, the rear drive wheels 17 are suspended.

The longitudinal axis A (Fig. 7) of the vehicle 1 extends from a front 55 (Fig. 2) to a rear 57 of the vehicle 1. As referenced herein, the "front" of the vehicle 1 refers to a leading portion or end of the vehicle 1 relative to the longitudinal axis during conventional use (e.g., during baling, harvesting, spraying and the like). The "rear" refers to the trailing portion or end relative to the longitudinal axis A during conventional operation. Similarly, the terms "front caster wheels" and "rear wheels" refer to the relative position of the wheels relative to the direction of travel of the vehicle 1 during conventional operation. The vehicle 1 also includes a lateral axis B (Fig. 7) that extends from a first side 58 to a second side 59 of the vehicle 1 and that is transverse to the longitudinal axis A. The vehicle 1 also includes a vertical axis C (Fig. 6).

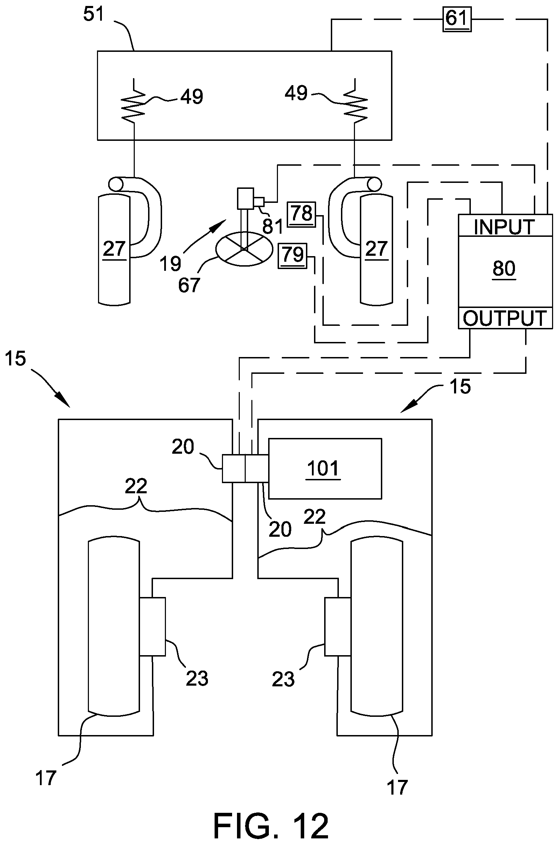

With reference to Figure 12, the first and second drive wheels 17 are each driven and controlled by separate drive systems 15. Each drive system 15 has a drive motor 23 for rotating the drive wheel 17 forward or backward. The drive motors 23 may be hydraulic motors that are driven by a pump 20 that is powered by the engine 101. Each drive wheel 17 may be controlled by a separate circuit (i.e., separate hydraulic pumps 20 with fluid lines 22 connected to the drive wheel motors 23). The first and second pumps 20 may be hydrostatic, variable displacement pumps. In some embodiments, fixed displacement or variable displacement motor(s) may be used. In this regard, while the drive systems 15 are shown and described herein as hydraulic systems, in other embodiments an electric drive system that operates as described may be used. Exemplary electric drive systems are disclosed in U.S. Patent No. 8,657,041.

The wheels 17 are powered and rotated independently by the drive systems 15. Accordingly, the wheels 17 can be rotated at different speeds by driving the motors at different speeds. In a drive wheel steering mode, the wheels 17 are driven at different speeds by the drive system 15. For example, in this mode, the motors 23 receive different amounts of fluid from the respective pumps 20 to differentiate the speed of the wheels 17. Separate fluid lines 22 extend between each pump 20 and drive motor 23 to independently rotate the wheels 17. The direction of fluid flow may be forward or reverse to independently rotate the wheels forward or reverse to propel the vehicle forward, reverse, through an arc (e.g., as during steering) or about a vertical axis midway between the drive wheels 17 (e.g., as during zero turn steering).

The vehicle 1 includes a control system to control the drive wheels 17 and front caster wheels 27 based on inputs from an operator. The control system includes a control unit 80, speed and direction control device 78, a mode selector 79 and steering mechanism which is shown as a steering wheel 67. The speed and direction control device 78, mode selector 79 and steering wheel 67 may be controlled from the operator station 13.

The mode selector 79 allows the operator to select a desired mode of operation (i.e., a drive wheel steering mode or a caster wheel steering mode). The control unit 80 receives the signal from the mode selector 79 and controls the mode of the steering system in response to the signal. The mode selector 79 may be, for example, part of a touch screen, a soft key, toggle switch, selection button or any other suitable interface for selecting the steering mode.

The speed and direction control device 78 is typically hand-operated and may be a sliding lever that causes an increase in forward speed as the lever is slid forward of a neutral position and an increase in reverse direction as the lever is slid rearward of the neutral position. The speed and direction control device 78 produces a signal in response to its position and the signal is transmitted to the control unit 80. The control unit 80 produces an output signal transmitted to the hydraulic pumps 20 that drive the rear wheels 17. The speed may also be controlled by a throttle that controls the engine speed. The vehicle 1 may be stopped by moving the speed and direction control device 78 to a zero-speed setting and/or by operating foot brake levers.

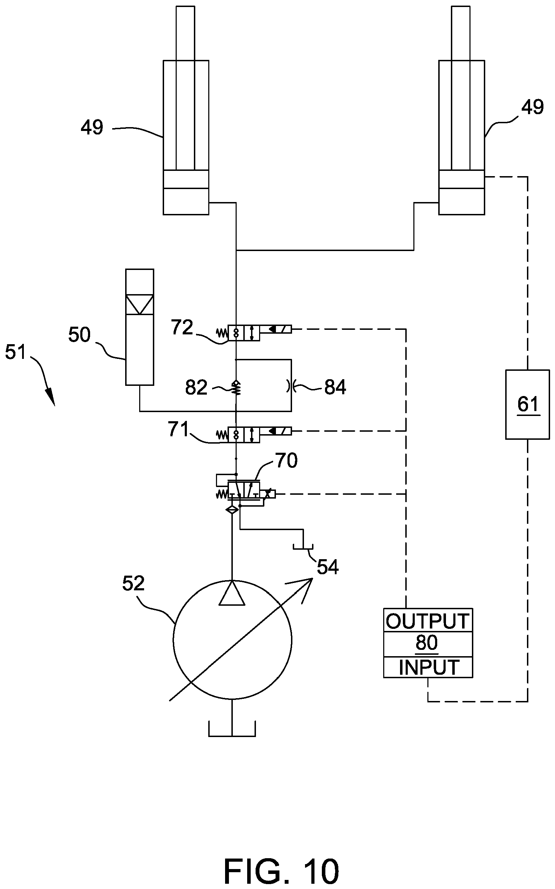

A suspension system 51 is controlled by the control unit 80 at least in part by a signal from a suspension system position sensor 61 as further described below. The suspension system 51 may also be adjusted based on one or more other signals relayed to the control unit 80 including speed, mode and/or direction of travel. The control unit 80 regulates one or more valves 70, 71, 72 (Fig. 10) within the suspension system 51 at least in part in response to sensor 61 and, optionally, in response to other signals relayed to the control unit 80.

In the illustrated embodiment, steering may be performed by a steering mechanism shown as a steering wheel 67 which regulates the steering system. For example, in the drive wheel steering mode, a sensor 81 measures the direction and angle of the steering wheel 67 and sends signals to the control unit 80. The control unit 80 produces a signal that is transmitted to the hydraulic pumps 20 to independently regulate the rotational speeds of the first and second drive wheels 17 (i.e., the speed and direction of rotation of each drive wheel 17).

In other embodiments, speed and/or steering may be controlled by different operator controls such as wheel levers, digital inputs, joysticks, dual sticks, and headsets.

In some embodiments, the self-propelled vehicle 1 is configured to optionally operate autonomously. The vehicle 1 may include sensors (e.g., cameras, GPS sensors and the like) that sense the position of a crop (e.g., windrow) and/or that may sense the position of the vehicle. The vehicle 1 may also include a controller that sends signals to the first and second rear wheel pumps or to various actuators to independently control the first and second rear drive wheels. In some embodiments, the area in which the vehicle is propelled is mapped and the area map is used to autonomously control the operation of the vehicle in the field. In such embodiments, the vehicle may include a riding station to carry an operator or the operator station may be eliminated.

The self-propelled vehicle 1 includes first and second front caster wheels 27 that are pivotally connected to the chassis 9 about a vertical pivot axis (which may be offset from the vertical axis at a caster angle). The first and second caster wheels 27 swing below a portion of the chassis 9. The front caster wheels 27 may be spaced to allow a windrow of crop or forage material to pass between the front caster wheels 27 to, for example, engage a pick-up device 11.

Each front caster wheel 27 has a rotational axis R₂₇ (Fig. 2) about which the front caster wheels 27 rotate. Description herein to the positon of the caster wheels 27 and/or their rotational axes R₂₇ relative to other portions and components of the vehicle 1 refers to the positon of the caster wheels 27 when the vehicle is being propelled forward with the caster wheels generally aligned with the longitudinal axis A, unless stated otherwise.

As shown in Figure 2, the rear wheels 17 have a diameter larger than the front caster wheels 27. In some embodiments, the ratio of the diameter of the rear wheels 17 to the diameter of the front caster wheels 27 is at least about 1.25:1 or at least about 1.5:1 or even at least about 3:1. In some embodiments, the vehicle 1 may have a wheelbase of at least about 80 inches, at least about 100 inches or at least about 125 inches (e.g., from about 80 inches to about 200 inches, from about 100 inches to about 180 inches or from about 110 inches to about 150 inches).

The vehicle 1 includes an engine 101 (e.g., gas or diesel powered engine) that drives one or more hydraulic pumps that in turn power the various hydraulic motors and cylinders (e.g., first and second drive wheel motors and any device motors). The engine 101 also provides power for the electrical systems of the vehicle 1. As shown in Figure 2, the engine 101 is between the rotational axes R₁₇ of the rear drive wheels 17 and the rotational axes R₂₇ of the front caster wheels 27. In other embodiments, the engine 101 is disposed to a side of the cab 121 and is above the front caster wheels 27. The engine 101 may be arranged transverse to the longitudinal axis A of the vehicle 1.

The engine 101 is disposed between the rotational axis R₁₇ of the rear drive wheels 17 and the operator station 13 (Fig. 2) and cab 121. In some embodiments, the "operator station" comprises the seat and controls for steering and controlling the speed of the vehicle 1. The operator station 13 is enclosed in the cab 121. As shown in Figure 2, the operator station 13 is forward of the rear drive wheels 17 and is also forward to the engine 101. At least a portion of the operator station 13 and/or cab 121 are disposed above the caster wheels 27 (i.e., above the caster wheels 27 when generally aligned with the longitudinal axis A as the vehicle is propelled forward.) Stated otherwise, at least a portion of the operation station 13 and/or cab 121 overlap the front caster wheels 27 relative to the longitudinal axis A (e.g., overlap a trailing portion of the caster wheel, overlap the caster wheel axle or overlap the entire caster wheel when the caster wheels 27 is generally aligned with the longitudinal axis A as the vehicle is propelled forward). Generally, the cab 121 and operation station 13 (e.g., operator seat) are not reversible.

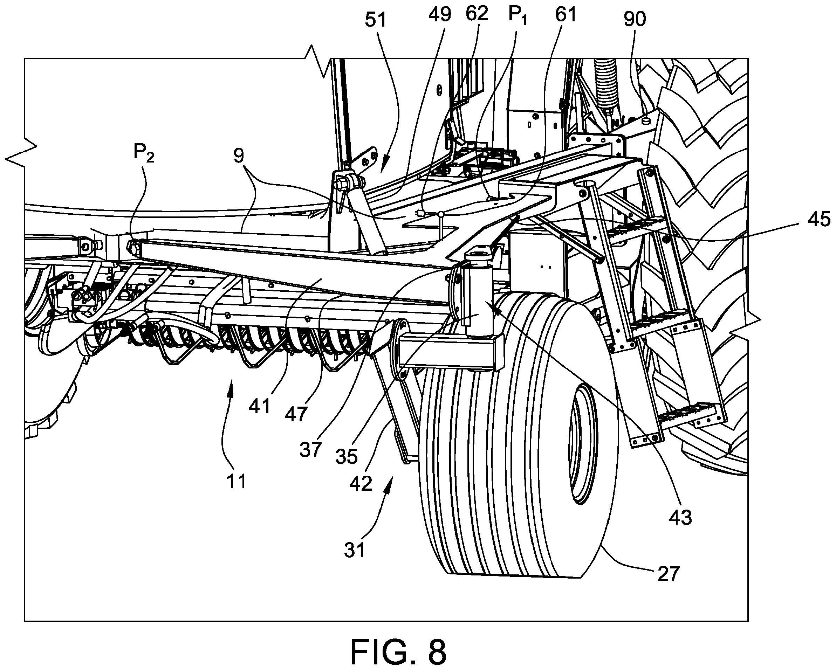

The front caster wheels 27 are connected to the chassis independent from each other which allows the caster wheels to be independently suspended to absorb forces transmitted during travel over uneven terrain. The front caster wheels 27 may be part of first and second swivel caster assemblies 31. Generally the first and second swivel caster assemblies 31 and subframes 41 described below are symmetric and description herein of an assembly or subframe also applies to the second assembly or subframe (e.g., description of a hub of the assembly indicates that the first assembly has a first hub and that the second assembly has a second hub). Each assembly 31 includes a hub 35 (Fig. 8) and a caster shaft 37 (which may be referred to as a "kingpin") that rotates within the hub 35. The swivel caster assemblies 31 may include bushings or bearings within the hub 35 that allow for rotation of the shaft 37 within the hub 35. Each caster shaft 37 is connected to a leg assembly 42 that connects to the front caster wheel axle. In the illustrated embodiment, the leg assembly 42 includes a single leg that attaches to an inner side of the wheel axle. In other embodiments, the leg assembly includes two legs that connect to the axle of the front caster wheel on each side of the wheel (as with a caster fork).

The hub 35 and shaft 37 form a swivel joint 43. The first and second front caster wheels 27 of the caster assemblies 31 are each connected to a subframe 41 by the swivel joint 43. The subframes 41 are suspended from the chassis 9 by a suspension system 51 having a suspension element 49, shown as a hydraulic cylinder in the illustrated embodiment. With reference to Figure 10, each cylinder 49 may be connected to an accumulator 50 in the suspension system with the hydraulic fluid being provided from a source 54 by a hydraulic pump 52. At least one valve 70, 71, 72 regulates the hydraulic fluid in the suspension system 51. Other suspension elements such as airbags and shock absorbers may be used. In some embodiments, a suspension mechanism such as single pivot joint of sliding/telescoping mechanism may connect the caster assemblies to the chassis (e.g., non-shock absorbing suspension mechanisms).

Each subframe 41 is also pivotally attached to the chassis 9 at an outer pivot point P₁ and an inner pivot point P₂. In this arrangement, the chassis 9 is supported by the subframes 41 and the chassis 9 and components carried by the chassis (e.g., operator station and cab) may move up and down relative to the subframes 41 as the vehicle 1 travels over uneven terrain.

As shown in Figure 8, the subframe 41 has a longitudinal arm 45 (or "first arm") and lateral arm 47 (or "second arm") that each extend from the chassis 9. The swivel joint 43 is at the point at which the arms 45, 47 meet and is forward of the inner and outer pivot points P₁, P₂ relative to a longitudinal axis A (Fig. 7) of the vehicle 1. The swivel joint 43 is also outward to both the inner and outer pivot points P₁, P₂ relative to the lateral axis B (Fig. 7) of the vehicle 1 (i.e., the outer pivot point P₁ of each subframe 41 is positioned between the inner pivot point P₂ and the point of attachment of the suspension element 49 relative to the lateral axis B).

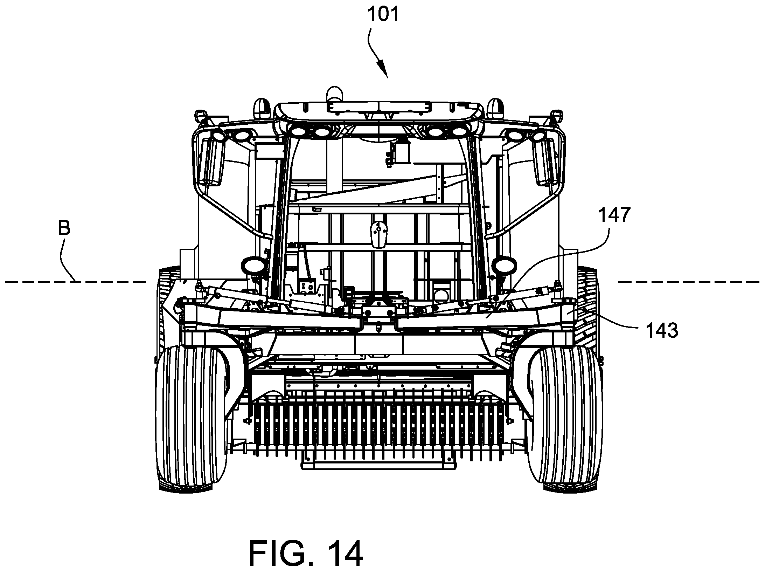

In the illustrated embodiment, the first arm 45 is generally parallel to the longitudinal axis A (Fig. 7) and the second arm 47 is generally parallel to the lateral axis B. In other embodiments (Figs. 13-14), the first arm 145 is angled upward toward the swivel joint 143 with respect to the longitudinal axis A. In the embodiment illustrated in Figures 13-14, the second arm 147 is generally parallel to the lateral axis B.

As shown in Figure 2, the first and second front caster wheels 27 (i.e., the axes of rotation R₂₇ of each wheel) are offset from the swivel joint 43 relative to the longitudinal axis A (Fig. 7) of the vehicle. The offset allows the first and second front caster wheels 27 to self-align with the direction of travel of the vehicle 1 as the vehicle is steered by differences between the speeds of the rear wheels 17. In some embodiments, the offset of the caster wheels (i.e., distance between the axis of rotation R₂₇ of the wheel and the swivel joint 43) is at least about 4 inches, at least about 8 inches or from about 8 to about 20 inches. These ranges are exemplary and other ranges may be used unless stated otherwise.

In other embodiments and/or in different modes of operation the front caster wheels 27 are steered. In such embodiments, the offset may be eliminated.

In a drive wheel steering mode, the vehicle 1 is steered by creating a differential speed between the first and second rear drive wheels 17 (i.e., by creating a difference between the first drive wheel rotational speed and the second drive wheel rotational speed). In this mode, each drive wheel 17 is capable of being driven forward or in reverse independent of the speed and direction of the other wheel (i.e., the drive wheels may be operated in counter-rotation). As an operator controls a steering mechanism (e.g., steering wheel), the rear drive wheels 17 rotate at different speeds to steer the vehicle 1 through an arc or deviation in the travel pathway. The speed and direction of travel (forward or rearward) may be controlled by a separate operator control. In the drive wheel steering mode, the vehicle 1 may be turned within its own footprint. In this mode, the caster wheels 27 self-align with the direction in which the drive wheels propel the vehicle, i.e., the caster wheels 27 follow the direction of travel of the rear drive wheels 17.

In a caster wheel steering mode, the swivel position of the caster wheels 27 may be controlled to steer the vehicle. As used herein, the "swivel position" of the caster wheels generally refers to the angular position of the caster wheels relative to the longitudinal axis A (Fig. 7) of the vehicle. The caster wheels 27 are connected to a steering system that selectively controls the swivel position of the caster wheels 27.

In some embodiments, the vehicle 1 includes a sensor 90 (Fig. 8) to determine the pitch of the ground near the vehicle (e.g., forward or behind the vehicle). The sensor 90 (i.e., inclinometer) may be mounted to or supported by the chassis 9 of the vehicle 1. Any suitable sensor for measuring the pitch or slope of the terrain may be used unless stated otherwise. The inclinometer may be configured as a mercury level. The inclinometer may generate a signal based on the incline of the vehicle itself relative to an absolute position. In other embodiments, the sensor measures the pitch of the ground near the vehicle 1 (e.g., by directing signals towards the terrain). The pitch of the ground refers to a difference in the height of the ground along the line of travel of the vehicle.

In some embodiments, the sensor 90 provides a signal related to the angle of inclination during or after adjustment of the steering system as described below (e.g., adjustment of one or more suspension elements) to improve the accuracy of the measurement. The signal from the sensor 90 (e.g., inclinometer) may be relayed to a controller (e.g., such as the control unit 80) to adjust the vehicle based on the signal after the suspension has been adjusted. In embodiments in which the self-propelled vehicle 1 is a self-propelled baler, the vehicle 1 may include a controller that presents a suggested bale position based on the pitch or the pitch and roll of the ground around the vehicle 1 as disclosed in commonly-owned PCT Patent Application No. PCT/US2017/033641, filed, May 19, 2017, entitled "Baling Vehicle with Automated Round Bale Ejection".

Referring now to Figure 10, the vehicle 1 includes a suspension system position sensor 61 that measures the position and/or distance of the suspension system 51 (e.g., suspension element 49 or subframe 41 suspended from suspension element 49) relative to the chassis 9 of the vehicle 1. Any sensor that measures the position of the suspension system 51 relative to the chassis and/or the inclination or pitch of the chassis may be used unless stated otherwise.

In the embodiment illustrated in Figure 8, the sensor 61 is a rotary potentiometer that is connected to the subframe 41 and the chassis 9 (e.g., through a linkage 62). In other embodiments, the position sensor 61 is an integral position sensor such as an integral position sensor within a hydraulic cylinder. The sensor 61 may operate by magnetostriction, by variable resistance (potentiometer-type) or by linear variable inductance.

The sensor 61 produces a signal based on the position of the suspension system 51 relative to the chassis 9 of the vehicle 1. The sensor 61 is communicatively connected to the control unit 80 which in turn is communicatively coupled to first valve 70, second valve 71, and third valve 72. In the illustrated embodiment, the control unit 80 is the same unit that controls operation of the drive systems. In other embodiments, the control unit 80 which adjusts the suspension system 51 is a different control unit. The control unit 80 and valves 70, 71, 72 regulate the hydraulic fluid in the hydraulic system with changes in the amount of hydraulic fluid altering the pressure supplied to suspension elements 49 (e.g., through action of accumulator 50 and pump 52). The valves 70, 71, 72 are controlled, at least in part, based on a signal produced by the control unit 80. In other embodiments, the pump 52 is controlled, at least in part, based on a signal produced by the control unit 80.

To adjust fluid pressure to suspension elements 49, a valve (e.g., the first valve 70) may be used to control the pressure in the system downstream of the valve. For example, the first valve 70 may be a proportional relieving valve that is adjusted by variable electric input (e.g., variable input from controller 80). The first valve 70 is used to regulate the amount of hydraulic fluid downstream of the first valve 70 (e.g., by adding or removing fluid downstream of the valve) to control the pressure in suspension elements 49 and accumulator 50. The illustrated arrangement of valves (e.g., first valve 70, second valve 71, and third valve 72) is an example and any valve or combination of valves which allows the suspension elements 49 to be controlled to adjust the pitch of the chassis 9 of the vehicle 1 may be used unless stated otherwise. In other embodiments, the pitch of the vehicle chassis 9 is controlled by devices other than valves (e.g., by controlling the hydraulic output of a dedicated hydraulic pump).

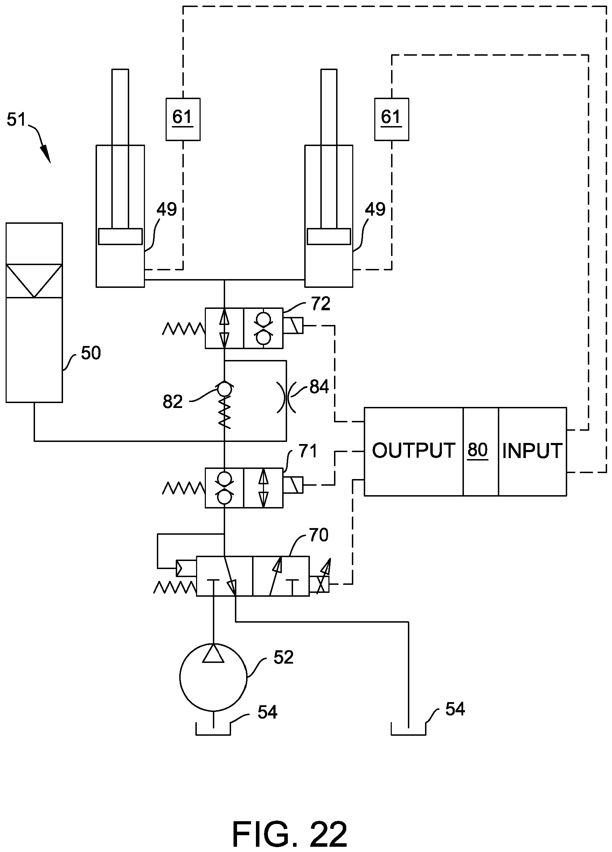

Another embodiment of a hydraulic suspension system 51 is shown in Figure 22. The system includes two suspension position sensors 61 (i.e., two sensors 61 that measure the position of each suspension element 49). Each suspension position sensor 61 communicates with the control unit 80. The third valve 72 is a normally closed valve.

The suspension system 51 may also be configured to absorb shock during operation of the vehicle 1. The absorber 50 allows fluid to flow to and from the suspension elements 49 when the vehicle travels over uneven terrain. The suspension system 51 may include a check valve 82 and/or restrictor 84 disposed between the second valve 71 and the third valve 72. The check valve 82 is configured to allow hydraulic fluid to flow to the accumulator 50 (e.g., to flow relatively quickly to the accumulator 50 for shock absorption when vehicle 1 encounters a change in terrain). The restrictor 84 is configured to allow hydraulic fluid to flow back to the suspension elements 49 (e.g., to dampen the flow of fluid to the suspension elements 49 to smooth the ride of an operator).

By varying the pressure of the hydraulic fluid supplied to the suspension elements 49, the position of the suspension elements 49 may be adjusted to allow the pitch of the chassis 9 of the vehicle 1 to maintain a desired distance relative to the subframe 41. Any control system in which the suspension system 51 (e.g., suspension elements 49) is adjusted based at least in part on a signal from the suspension system position sensor 61 may generally be used unless stated otherwise.

In the illustrated embodiment, the vehicle 1 includes a single suspension system position sensor 61. In other embodiments, the vehicle 1 includes a first suspension system position sensor 61 that measures the positon of the suspension relative to the chassis on the first side 58 (Fig. 6) of the vehicle 1 and includes a second suspension system position sensor 61 that measures the positon of a second suspension system on the second side 59 of the vehicle 1 as illustrated in the embodiment of Figure 22. Alternatively or in addition, the suspension system position sensor 61 may generally be positioned at any position along the chassis 9 and/or subframe 41 to operatively measure the pitch of the vehicle relative to the suspension.

The control unit 80 that controls the position of the suspension elements 49 based at least in part on a signal from the suspension system position sensor 61 includes a processor and a memory. The processor processes the signals received from various sensors, selectors and control devices of the system. The memory stores instructions that are executed by the processor.

Control unit 80 may be a computer system. Computer systems, as described herein, refer to any known computing device and computer system. As described herein, all such computer systems include a processor and a memory. However, any processor in a computer system referred to herein may also refer to one or more processors wherein the processor may be in one computing device or a plurality of computing devices acting in parallel. Additionally, any memory in a computer device referred to herein may also refer to one or more memories wherein the memories may be in one computing device or a plurality of computing devices acting in parallel.

The term processor, as used herein, refers to central processing units, microprocessors, microcontrollers, reduced instruction set circuits (RISC), application specific integrated circuits (ASIC), logic circuits, and any other circuit or processor capable of executing the functions described herein. The above are examples only, and are thus not intended to limit in any way the definition and/or meaning of the term "processor."

In one embodiment, a computer program is provided to enable control unit 80, and this program is embodied on a computer readable medium. In an example embodiment, the computer system is executed on a single computer system, without requiring a connection to a server computer. In a further embodiment, the computer system is run in a Windows® environment (Windows is a registered trademark of Microsoft Corporation, Redmond, Washington). In yet another embodiment, the computer system is run on a mainframe environment and a UNIX® server environment (UNIX is a registered trademark of X/Open Company Limited located in Reading, Berkshire, United Kingdom). Alternatively, the computer system is run in any suitable operating system environment. The computer program is flexible and designed to run in various different environments without compromising any major functionality. In some embodiments, the computer system includes multiple components distributed among a plurality of computing devices. One or more components may be in the form of computer-executable instructions embodied in a computer-readable medium.

The computer systems and processes are not limited to the specific embodiments described herein. In addition, components of each computer system and each process can be practiced independent and separate from other components and processes described herein. Each component and process also can be used in combination with other assembly packages and processes.

In some embodiments, pitch adjustment of the vehicle 1 may be suspended during one or more operations of the vehicle 1. For example, pitch-adjustment (and, as in some embodiments, suspension system shock absorption) may be suspended during (1) counter-steering of the vehicle (i.e., when the rear wheels 17 rotate in opposite directions), (2) during zero-turn steering (i.e., when one rear wheel 17 is stationary while the other rear wheel 17 rotates), (3) during operation at vehicle speeds less than a threshold (e.g., less than 3 mph), (4) while the vehicle travels in reverse (i.e., both drive wheels rotate in reverse), and/or (5) during ejection of a load from the vehicle (e.g., in embodiments in which the self-propelled vehicle is a baler, during ejection of a bale). Pitch-leveling may be suspended by closing the third valve 72 to isolate the suspension elements 49 from the accumulator 50. The third valve 72 may be a proportional relieving valve. In other embodiments, two or more valves block flow to the accumulator 50 and/or block flow between suspension elements 49. In some embodiments, control unit 80 receives signals from the speed and direction control device 78 (Fig. 12) and/or mode selector 79 and suspends pitch-adjustment and/or shock absorption based on signals received from the speed and direction control device 78 and/or mode selector 79.

The control unit 80 may be configured such that the suspension elements 49 are adjusted to a targeted compression length (or within a range of compression lengths). The targeted compression length may be a compression length which allows for a full range of suspension, such as near the center of the range of motion of the suspension element 49. By moving the suspension elements (e.g., hydraulic cylinders) to a compressed length at which a substantially full range of suspension may be achieved, the suspension elements are less limited in the amount of suspension they provide even with changing vehicle loads and/or travel over terrain in which the pitch of the ground changes. In some embodiments, the suspension elements are not centered within their effective range of motion.

In some embodiments, the control unit 80 and/or sensor 61 are calibrated to match the pitch of the chassis 9 with the ground pitch. Calibration may be performed when the ground pitch is substantially zero. Calibration may also be performed under load (e.g., with a bale in the baling chamber to account for pitch change caused by tire squat or deflection).

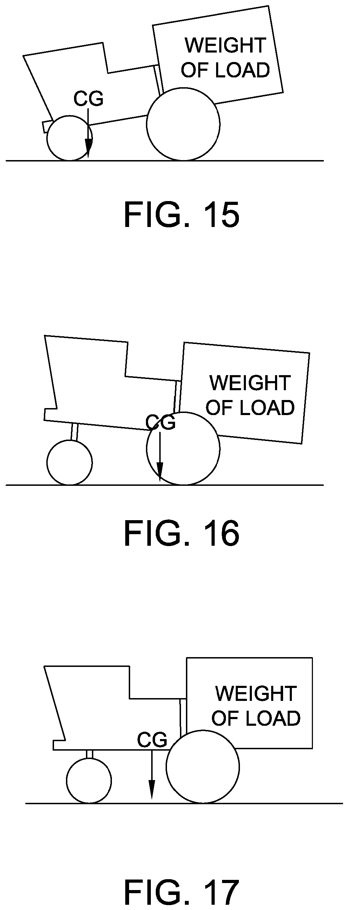

Leveling of the pitch of a vehicle having a front-wheel suspension is shown schematically in Figures 15-21. Without pitch-leveling, removing a load from the vehicle 1 (Fig. 15) causes the pitch of the chassis of the vehicle 1 to not match the ground pitch. Adding a load (Fig. 16) without pitch-leveling also causes the chassis pitch to mismatch the ground pitch. By adjusting the suspension elements 49 based on output from the suspension system position sensor 61, the pitch of the vehicle chassis may more closely match the pitch of the ground (Fig. 17) which improves the measurement of an inclinometer onboard the vehicle.

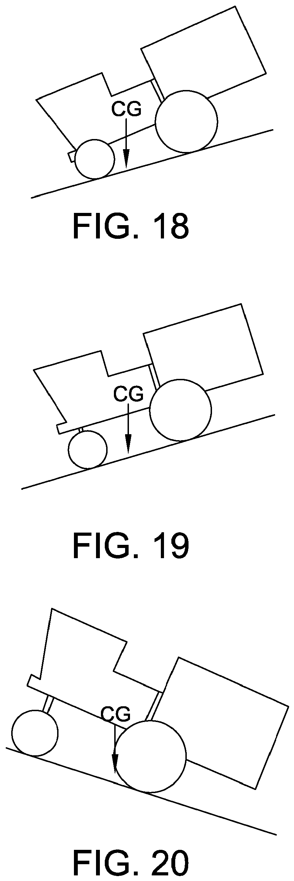

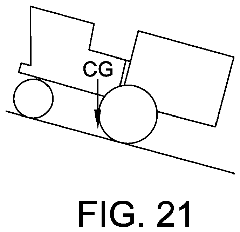

Similarly, traveling over ground that is downward pitched (Fig. 18) or upward pitched (Fig. 20) may cause the pitch of the chassis to not match the pitch of the ground. This may be corrected (Figs. 19 and 21) by adjusting the suspension elements 49 based on output from the suspension system position sensor 61.

In the illustrated embodiment, the front wheels 27 are suspended by suspension elements 49 (Fig. 8). In other embodiments, the rear wheels 17 are suspended by suspension elements 49 or both the front wheels 27 and rear wheels 17 are suspended by suspension elements 49. The control unit 80 may adjust the suspension of any wheel 17, 27 which includes a suspension element 49. For example, the pitch of the chassis 9 may be adjusted in embodiments in which only the front wheels 27 are suspended, only the rear wheels 17 are suspended, or both the front 27 and rear wheels 17 are suspended.

Compared to conventional vehicles, embodiments of the self-propelled vehicle of the present disclosure have several advantages. By adjusting the suspension elements at least in part based on the signal from the suspension system position sensor, the pitch of the chassis of the vehicle may be made generally level with the pitch of the ground as the load of the vehicle changes and/or the pitch of the ground changes during travel of the vehicle. Adjusting the suspension elements allows the suspension elements to be adjusted toward a target compression length such a compression length with a larger increase in the suspension range (e.g., toward the center of the range of motion of the suspension elements). By maintaining the pitch of the vehicle chassis closer to the pitch of the ground during operation of the vehicle, the caster wheels are more maneuverable during vehicle turning and the vehicle operator does not sense misalignment of the pitch of the vehicle chassis with the pitch of the ground (i.e., sense a "nose-up" or "nose-down" condition). Further, in vehicles that include an inclinometer onboard the vehicle to measure the pitch of the ground, the accuracy of the inclinometer may be improved by leveling the vehicle chassis pitch with the pitch of the ground.

As used herein, the terms "about," "substantially," "essentially" and "approximately" when used in conjunction with ranges of dimensions, concentrations, temperatures or other physical or chemical properties or characteristics is meant to cover variations that may exist in the upper and/or lower limits of the ranges of the properties or characteristics, including, for example, variations resulting from rounding, measurement methodology or other statistical variation.

When introducing elements of the present disclosure or the embodiment(s) thereof, the articles "a", "an", "the" and "said" are intended to mean that there are one or more of the elements. The terms "comprising," "including," "containing" and "having" are intended to be inclusive and mean that there may be additional elements other than the listed elements. The use of terms indicating a particular orientation (e.g., "top", "bottom", "side", etc.) is for convenience of description and does not require any particular orientation of the item described.

As various changes could be made in the above constructions and methods without departing from the scope of the invention, as defined by the appended claims, it is intended that all matter contained in the above description and shown in the accompanying drawing[s] shall be interpreted as illustrative and not in a limiting sense.

## Claims

1. A self-propelled vehicle (1) having a longitudinal axis (A) and comprising:
a chassis (9);
first and second rear drive wheels (17) fixed to the chassis, each wheel being driven and controlled by a separate drive system;
first and second front caster wheels (27) connected to the chassis, the first and second front caster wheels being rotatably mounted about a rotational axis (R27), pivotally connected about a vertical pivot axis at a swivel joint (43), and suspended by a suspension system (51) comprising a suspension element (49);
an operator station (13) forward of the driven rear wheels with at least a portion of the operator station overlapping the front caster wheels along the longitudinal axis; a suspension system control connected to the suspension element ;and
a control system to control the rate of rotation of the drive rear wheels, the control system being capable of controlling the rear wheels in at least a counter-steering mode in which the rear wheels rotate in opposite directions and a zero-turn steering mode in which one rear wheel is stationary while the other wheel rotates, wherein the suspension system control is suspended in the counter-steering mode and the zero-turn steering mode.

2. The self-propelled vehicle as set forth in claim 1 wherein the suspension element is a hydraulic cylinder.

3. The self-propelled vehicle as set forth in claim 1 or claim 2 wherein the self-propelled vehicle is a self-propelled baler.

4. The self-propelled vehicle as set forth in any one of claims 1 to 3 wherein the suspension element is a hydraulic cylinder, the vehicle further comprising a valve (70, 71, 72) to regulate the fluid pressure supplied to the hydraulic cylinder.

5. The self-propelled vehicle as set forth in claim 4 further comprising an accumulator (50) fluidly connected to the hydraulic cylinder.

6. The self-propelled vehicle as set forth in any one of claims 1 to 5 further comprising a subframe (41), one of the first and second front caster wheels forming a swivel joint with the subframe, the subframe being suspended from and pivotally attached to the chassis by the suspension element.

7. The self-propelled vehicle as set forth in any one of claims 1 to 6 wherein the suspension element is connected to the chassis.

8. The self-propelled vehicle as set forth in any one of claims 1 to 7 wherein the suspension element is a first suspension element, the vehicle further comprising a second suspension element that enables one of the first and second front caster wheels to move relative to the chassis.

9. The self-propelled vehicle as set forth in any one of claims 1 to 8 wherein the suspension element is a hydraulic cylinder, the suspension system further comprising a hydraulic pump (52) for providing hydraulic fluid to the hydraulic cylinder.

## Patentansprüche

1. Eigenangetriebenes Fahrzeug (1), das eine Längsachse (A) aufweist und umfasst:
ein Fahrgestell (9),
erste und zweite angetriebene Hinterräder (17), die an dem Fahrgestell fixiert sind, wobei jedes Rad durch ein separates Antriebssystem angetrieben und gesteuert wird,
erste und zweite vordere Lenkräder (27), die mit dem Fahrgestell verbunden sind, wobei die ersten und zweiten vorderen Lenkräder drehbar um eine Drehachse (R27) montiert sind, schwenkbar um eine vertikale Schwenkachse an einem Drehgelenk (43) verbunden sind und durch ein Aufhängungssystem (51), das ein Aufhängungselement (49) umfasst, aufgehängt sind,
eine Bedienerstation (13), die vor den angetriebenen Hinterrädern angeordnet ist, wobei wenigstens ein Teil der Bedienerstation die vorderen Lenkräder entlang der Längsachse überlappt,
eine Aufhängungssystemsteuerung, die mit dem Aufhängungselement verbunden ist, und
ein Steuersystem zum Steuern der Drehgeschwindigkeit der angetriebenen Hinterräder, wobei das Steuersystem die Hinterräder in wenigstens einem Gegenlenkmodus, in dem sich die Hinterräder in entgegengesetzten Richtungen drehen, und in einem Nulldrehung-Lenkmodus, in dem ein Hinterrad stillsteht, während sich das andere Rad dreht, steuern kann, wobei die Aufhängungssystemsteuerung in dem Gegenlenkmodus und dem Nulldrehung-Lenkmodus ausgesetzt wird.

2. Eigenangetriebenes Fahrzeug nach Anspruch 1, wobei das Aufhängungselement ein Hydraulikzylinder ist.

3. Eigenangetriebenes Fahrzeug nach Anspruch 1 oder 2, wobei das eigenangetriebene Fahrzeug eine eigenangetriebene Ballenpresse ist.

4. Eigenangetriebenes Fahrzeug nach einem der Ansprüche 1 bis 3, wobei das Aufhängungselement ein Hydraulikzylinder ist, wobei das Fahrzeug weiterhin ein Ventil (70, 71, 72) für das Regeln des zu dem Hydraulikzylinder zugeführten Fluiddrucks umfasst.

5. Eigenangetriebenes Fahrzeug nach Anspruch 4, das weiterhin einen Akkumulator (50) in einer Fluidverbindung mit dem Hydraulikzylinder umfasst.

6. Eigenangetriebenes Fahrzeug nach einem der Ansprüche 1 bis 5, das weiterhin einen Subrahmen (41) umfasst, wobei eines der ersten und zweiten vorderen Lenkräder ein Drehgelenk mit dem Subrahmen bildet, wobei der Subrahmen über das Aufhängungselement an dem Fahrgestell aufgehängt und drehbar an diesem befestigt ist.

7. Eigenangetriebenes Fahrzeug nach einem der Ansprüche 1 bis 6, wobei das Aufhängungselement mit dem Fahrgestell verbunden ist.

8. Eigenangetriebenes Fahrzeug nach einem der Ansprüche 1 bis 7, wobei das Aufhängungselement ein erstes Aufhängungselement ist, wobei das Fahrzeug weiterhin ein zweites Aufhängungselement umfasst, das ermöglicht, dass sich das erste oder das zweite vordere Lenkrad relativ zu dem Fahrgestell bewegt.

9. Eigenangetriebenes Fahrzeug nach einem der Ansprüche 1 bis 8, wobei das Aufhängungselement ein Hydraulikzylinder ist und das Aufhängungssystem weiterhin eine Hydraulikpumpe (52) für das Vorsehen eines Hydraulikfluids zu dem Hydraulikzylinder ist.

## Revendications

1. Véhicule autopropulsé (1) présentant un axe longitudinal (A) et comprenant :
un châssis (9) ;
des première et seconde roues motrices arrière (17) fixées au châssis, chaque roue étant entraînée et commandée par un système d'entraînement séparé ;
des première et seconde roues avant pivotantes (27) reliées au châssis, les première et seconde roues avant pivotantes étant montées de manière rotative autour d'un axe de rotation (R27), reliées de manière pivotante autour d'un axe de pivotement vertical au niveau d'un joint articulé (43), et suspendues par un système de suspension (51) comprenant un élément de suspension (49) ;
un poste d'opérateur (13) à l'avant des roues motrices arrière avec au moins une partie du poste d'opérateur chevauchant les roues avant pivotantes le long de l'axe longitudinal ; une commande de système de suspension reliée à l'élément de suspension ; et
un système de commande pour commander la vitesse de rotation des roues motrices arrière, le système de commande de la vitesse de rotation étant capable de commander les roues arrière dans au moins un mode de contre-braquage dans lequel les roues arrière tournent dans des directions opposées et un mode de braquage à braquage zéro dans lequel une roue arrière est immobile tandis que l'autre roue tourne, dans lequel la commande du système de suspension est suspendue dans le mode de contre-braquage et le mode de braquage à braquage zéro.

2. Véhicule autopropulsé selon la revendication 1, dans lequel l'élément de suspension est un cylindre hydraulique.

3. Véhicule autopropulsé selon la revendication 1 ou la revendication 2, dans lequel le véhicule autopropulsé est une presse à balles autopropulsée.

4. Véhicule autopropulsé selon l'une quelconque des revendications 1 à 3, dans lequel l'élément de suspension est un cylindre hydraulique, le véhicule comprenant en outre une vanne (70, 71, 72) pour réguler la pression de fluide fournie au cylindre hydraulique.

5. Véhicule autopropulsé selon la revendication 4, comprenant en outre un accumulateur (50) relié de manière fluidique au cylindre hydraulique.

6. Véhicule autopropulsé selon l'une quelconque des revendications 1 à 5, comprenant en outre un sous-cadre (41), l'une des première et seconde roues pivotantes avant formant un joint articulé avec le sous-cadre, le sous-cadre étant suspendu au châssis et fixé de manière pivotante au châssis par l'élément de suspension.

7. Véhicule autopropulsé selon l'une quelconque des revendications 1 à 6, dans lequel l'élément de suspension est relié au châssis.

8. Véhicule autopropulsé selon l'une quelconque des revendications 1 à 7, dans lequel l'élément de suspension est un premier élément de suspension, le véhicule comprenant en outre un second élément de suspension qui permet à l'une des première et seconde roues pivotantes avant de se déplacer par rapport au châssis.

9. Véhicule autopropulsé selon l'une quelconque des revendications 1 à 8, dans lequel l'élément de suspension est un cylindre hydraulique, le système de suspension comprenant en outre une pompe hydraulique (52) pour fournir un fluide hydraulique au cylindre hydraulique.
